# EUROPÄISCHE PATENTSCHRIFT

(11) **EP 1 157 229 B1**
(45) Veröffentlichungstag und Bekanntmachung des Hinweises auf die Patenterteilung: **24.03.2004**
(21) Anmeldenummer: 00903522.1
(22) Anmeldetag: 04.01.2000
(51) Int. Cl.: F16J 9/22

(54) **KOLBEN MIT ZUMINDEST EINER RINGNUT UND ZUMINDEST EINEM KOLBENRING**
PISTON WITH AT LEAST ONE RING GROOVE AND AT LEAST ONE PISTON RING
PISTON COMPORTANT AU MOINS UNE RAINURE ANNULAIRE ET AU MOINS UN SEGMENT

(30) Priorität: 27.02.1999 DE 19908542
(43) Veröffentlichungstag der Anmeldung: 28.11.2001
(73) Patentinhaber: MAHLE GMBH, D-70376 Stuttgart (DE)
(72) Erfinder: SPATSCHEK, Linus, D-72202 Nagold (DE)
(86) Internationale Anmeldenummer: PCT/DE2000/000093
(87) Internationale Veröffentlichungsnummer: WO 2000/052364

(56) Entgegenhaltungen:
- EP-A- 0 672 849
- US-A- 1 560 307
- US-A- 2 815 255
- US-A- 3 410 567
- US-A- 3 831 952
- US-A- 4 350 352
- US-A- 5 598 763

## Beschreibung

Die Erfindung bezieht sich gemäß Anspruch 1 auf Kolben aus einer Aluminiumlegierung oder einer Magnesiumlegierung mit einer unbewehrten Ringnut und zumindest einem Kolbenring, wobei die Flanken des zumindest einen Kolbenringes parallel zueinander verlaufen und gemäß Anspruch 3 auf einen Kolben, bei dem die Flanken der zumindest einen Ringnut parallel zueinander verlaufen.

Diese Merkmale weisen nahezu alle der heute üblichen Kolben für Ottomotoren bzw. die dazugehörigen Kolbenringe auf.

Bei PKW-Ottomotoren besteht seit längerer Zeit das Problem, daß die Nutflanken derartiger Kolben in Einzelfällen Verschleiß im Bereich der Nutflanken aufweisen. Diese Schäden werden auf Adhäsionskräfte zwischen Nutflanken und Kolbenringen zurückgeführt.

Eine Lösung dieser Verschleißprobleme wurde bisher dadurch erzielt, daß die Ringnut durch Hartanodisieren bewehrt wurde oder daß die Kolbenringe beschichtet wurden. Nachteil derartiger Lösungen ist ein erhöhter technischer Aufwand mit entsprechenden Kosten.

Die Erfindung beschäftigt sich daher mit dem Problem, bei gattungsgemäßen Kolben die Entstehung von Nutflankenschäden auf einfache und kostengünstige Art zu vermeiden.

Eine Lösung dieses Problems wird bei gattungsgemäßen Kolben erzielt durch die kennzeichnenden Merkmale der Ansprüche 1 bzw. 3. Eine vorteilhafte Weiterbildung des Anspruchs 1 ist Gegenstand des Unteranspruchs 2.

Die Erfindung beruht auf dem Grundgedanken, die nach einer längeren Einlaufphase vorhandene Kontur der Nutflanken schon im Neuzustand zu erzeugen, indem die Nutflanken - vorzugsweise durch Stechen der Nuten mit konturierten Nutmessern - eine in radialer Richtung gekrümmte Oberfläche aufweisen.

Dabei ist die Krümmung der Nutflanken konvex auszuführen.

Unter Kolbenringen, deren Ringflanken annähernd in radiale Richtung verlaufen, ist eine Abweichung von maximal 5 zur radialen Richtung zu verstehen, wie sie insbesondere bei Rechteckringen und Minutenringen mit Innenphase oder mit Innenwinkel auftreten kann, während als Kolbenringe, deren Ringflanken exakt in radiale Richtung verlaufen, z. B. Rechteckringe ohne Phase bzw. Winkel angesehen werden.

Zwar ist es aus der US 3,831,952 A bereits bekannt, zum Zweck einer besseren Abdichtung Nutflanken von Ringnuten in Richtung nach radial außen mit einer linearen - durch Angabe eines Winkels festgelegten - Aufweitung herzustellen, die Herstellung von gekrümmten Nutflanken, die in etwa das Ergebnis des Einlaufvorganges vorwegnehmen, ist jedoch aus dieser Entgegenhaltung nicht bekannt.

Ferner ist es aus der US 4,350,352 A bekannt, sowohl die Nutflanken als auch die Flanken des Kolbenringes gekrümmt herzustellen, wodurch auch dann eine gute Abdichtung erzielt werden soll, wenn aufgrund des Spiels zwischen Kolben und Zylinder der Kolben außermittig im Zylinder oder schräg zur Zylinderachse läuft.

Aus der AT-PS 134551 sind Kolben und Kolbenringe bekannt, deren Nut- bzw. Ringflanken nicht in radialer Richtung verlaufen, sondern bei denen zumindest die Nutflanken gegen die Kolbenachse geneigt sind und bei denen die Nut nach außen hin aufgeweitet ist (Fig. 6), wobei diese Merkmale dazu führen sollen, daß der Kolbenring nahezu ohne Vorspannung laufen kann und die zur Abdichtung notwendige Anpreßkraft in Abhängigkeit vom Verbrennungsdruck erzielt wird.

Ferner ist aus der EP 672849 A, Fig. 3 ein Kolben bekannt, dessen Nut nach außen hin aufgeweitet ist und bei dem die Ringflanken parallel zueinander verlaufen. Dargestellt ist dort jedoch nicht der Neuzustand des Kolbens, sondern die Aufweitung der Nutflanken ist auf Verschleiß im Motorbetrieb zurückzuführen.

Aus der DE 42 05 503 A1 ist zur Vermeidung von Nutenflankenbeschädigungen bekannt, die Ringnutflanken mit einer speziellen umfangsmäßig verlaufenden Profilierung zu versehen. Nachteilig hierbei ist der große Herstellungsaufwand.

Bei der vorliegenden Erfindung beziehen sich die Richtungsangaben "radial" und "axial" auf die Mittelachse des Kolbens. Radial nach außen heißt also von der Mittelachse weg, die axiale Richtung ist durch die Mittelachse des Kolbens vorgegeben. Die radiale Richtung kann auch als Horizontale bezeichnet werden, wenn die Mittelachse des Kolbens als Vertikale angesehen wird.

Prinzipiell ist es auch möglich, den erfindungsgemäßen Effekt zu erzielen, indem anstatt der Nutflanken die Ringflanken eine Krümmung aufweisen, sodaß die axiale Höhe der Ringe in Richtung nach radial außen ebenfalls um maximal 50 µm abnimmt. Dies erfordert allerdings eine aufwendige Einzel-Bearbeitung der Ringflanken, während die Ringe im Normalfall bei der Endbearbeitung in größeren Mengen zwischen zwei parallelen Scheiben geläppt werden. Um eine der Kontur eines gelaufenen Kolbenringes entsprechende Krümmung aufzuweisen, ist die Krümmung der Kolbenringflanken konkav auszuführen.

Die Erfindung wird im folgenden anhand einer Zeichnung näher erläutert. Es zeigt:
- Fig. 1: die Nutpartie eines erfindungsgemäßen Kolbens gemäß Anspruch 1
- Fig. 2: die Nutpartie eines erfindungsgemäßen Kolbens gemäß Anspruch 4.

Der Kolben 1 weist mehrere Ringnuten 2 mit Kolbenringen 3 auf. Die Nutflanken 4 und 5 der obersten Ringnut sind in radialer Richtung gekrümmt, sodaß die Nuthöhe im Bereich der Lauffläche 6 um ca. 30 µm höher ist als im Bereich des Nutgrunds 7. Der gekrümmte Bereich ist mit den Bezugszeichen 8 bzw. 9 bezeichnet.

In den Zeichnungen ist die Krümmung der Nutflanken bzw. der Kolbenringflanken der Anschaulichkeit halber übertrieben dargestellt.

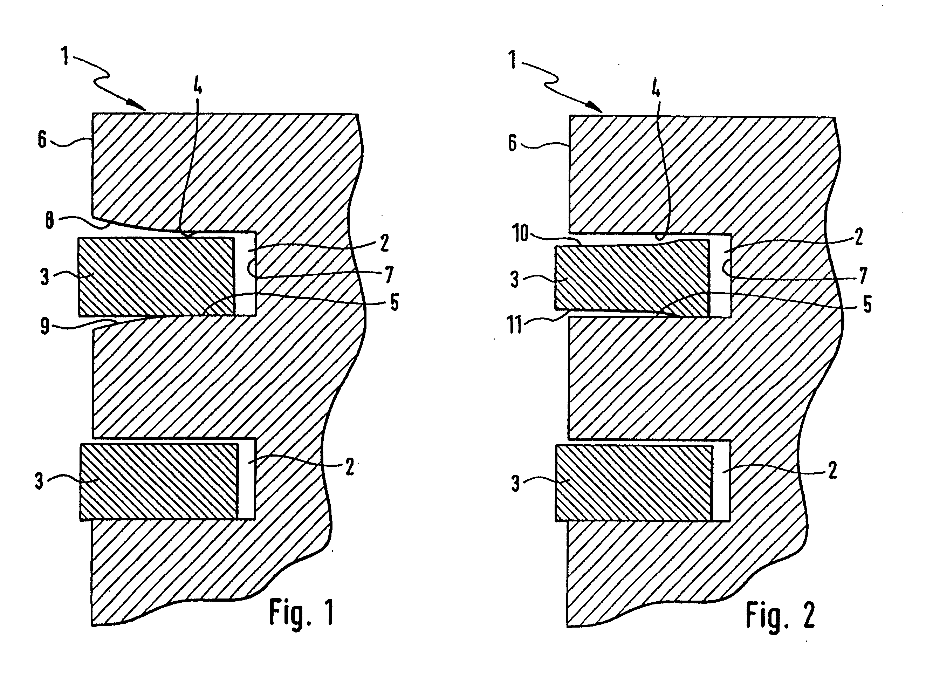

Bei der Ausführung gemäß Fig. 2 verlaufen die Nutflanken 4 und 5 in radialer Richtung parallel zueinander und die Flanken des Kolbenringes weisen konkav gekrümmte Bereiche 10 und 11 auf.

## Patentansprüche

1. Kolben (1) aus einer Aluminiumlegierung oder einer Magnesiumlegierung mit zumindest einer unbewehrten Ringnut (2) und zumindest einem Kolbenring (3), wobei die Flanken des Kolbenrings (3) in zueinander parallelen Ebenen liegen und annähernd oder exakt in radialer Richtung verlaufen,
**dadurch gekennzeichnet,**
**daß** im Neuzustand des Kolbens (1) eine oder beide Nutflanken (4, 5) der mindestens einen Ringnut (2) in radialer Richtung zumindest in Teilbereichen gekrümmt (8, 9) sind, wobei sich der axiale Abstand der Nutflanken (4, 5) zueinander, also die Nuthöhe, nach außen hin erweitert und die Differenz der Nuthöhe vom radial innen liegenden Bereich der Krümmung zum radial außen liegenden Bereich der Krümmung bei maximal 50 µm liegt und wobei die Krümmung der Nutflanke bzw. der Nutflanken (4, 5) etwa den Verlauf aufweist, den ein entsprechender Kolben (1) ohne die obigen kennzeichnenden Merkmale dieses Anspruchs 1 nach dem Einlaufvorgang aufweisen würde.

2. Kolben nach Anspruch 1,
**dadurch gekennzeichnet,**
**daß** nur die untere Nutflanke (5) eine Krümmung aufweist.

3. Kolben (1) aus einer Aluminiumlegierung oder einer Magnesiumlegierung mit zumindest einer unbewehrten Ringnut (2) und zumindest einem Kolbenring (3), wobei die Flanken der Ringnut (2) parallel zueinander verlaufen,
**dadurch gekennzeichnet,**
**daß** im Neuzustand des Kolbens eine oder beide Flanken des mindestens einen Kolbenringes (3) in radialer Richtung zumindest in Teilbereichen (10,11) gekrümmt sind, wobei sich der axiale Abstand der Ringflanken zueinander, also die Höhe des Kolbenringes in Richtung nach radial außen vermindert und wobei die Differenz der Ringhöhe vom radial innen liegenden Bereich der Krümmung zum radial außen liegenden Bereich der Krümmung bei maximal 50 µm liegt und wobei die Krümmung der Ringflanken etwa den Verlauf aufweist, den Ringflanken ohne die obigen kennzeichnenden Merkmale dieses Anspruchs 3 nach dem Einlaufvorgang aufweisen.

## Claims

1. Piston (1) made of an aluminium alloy or a magnesium alloy with at least one non-reinforced annular groove (2) and at least one piston ring (3), the flanks of the piston ring (3) being located in planes which are parallel to one another and extending approximately or exactly in the radial direction, **characterised in that**, in the new state of the piston (1), one or both groove flanks (4, 5) of the at least one annular groove (2) are curved (8, 9) in the radial direction, at least in partial regions, the axial spacing of the groove flanks (4, 5) from one another, in other words the groove height, widening outwardly and the difference in the groove height from the radially inner region of the curve to the radially outer region of the curve being a maximum of 50 µm and the curve of the groove flank or the groove flanks (4, 5) having substantially the course which a corresponding piston (1) without the above characterising features of this claim (1) would have after the run-in process.

2. Piston according to claim 1, **characterised in that** only the lower groove flank (5) has a curve.

3. Piston (1) made of an aluminium alloy or a magnesium alloy with at least one non-reinforced annular groove (2) and at least one piston ring (3), wherein the flanks of the annular groove (2) extend parallel to one another, **characterised in that**, in the new state of the piston, one or both flanks of the at least one piston ring (3) are curved in the radial direction, at least in partial regions (10, 11), the axial spacing of the annular flanks from one another, in other words the height of the piston ring reducing in the radially outward direction and the difference in the ring height from the radially inner region of the curve to the radially outer region of the curve being a maximum of 50 µm and the curve of the annular flanks having substantially the course which annular flanks without the above characterising features of this claim 3 have after the run-in process.

## Revendications

1. Piston (1) en un alliage d'aluminium ou un alliage de magnésium, présentant au moins une gorge de segment (2) non armée et au moins un segment de piston (3), dans lequel les flancs du segment de piston (3) se situent dans des plans parallèles l'un à l'autre et s'étendent approximativement ou exactement dans la direction radiale,
**caractérisé en ce**
**qu'**à l'état neuf du piston (1) un ou plusieurs flancs de gorge (4, 5) de la ou des gorges de segment (2) sont courbes dans la direction radiale, au moins dans des zones partielles (8, 9), l'écartement axial des flancs de gorge (4, 5) l'un par rapport à l'autre, c'est-à-dire la hauteur de gorge, s'élargissant vers l'extérieur et la différence de la hauteur de gorge de la zone de la courbure située radialement à l'intérieur à la zone de la courbure située radialement à l'extérieur s'élevant au maximum à 50 µm et la courbure du flanc de gorge ou des flancs de gorge (4, 5) présentant sensiblement le contour que présenterait un piston (1) correspondant, après la phase rodage, sans les particularités caractérisantes ci-avant de la présente revendication 1.

2. Piston selon la revendication 1,
**caractérisé en ce**
**que** seul le flanc de gorge inférieur (5) présente une courbure.

3. Piston (1) selon la revendication 1, en un alliage d'aluminium ou un alliage de magnésium, présentant au moins une gorge de segment (2) non armée et au moins un segment de piston (3), dans lequel les flancs de la gorge de segment (2) s'étendent parallèlement l'un à l'autre
**caractérisé en ce**
**qu'**à l'état neuf du piston l'un ou les deux flancs du ou des segments de piston (3) sont courbes dans la direction radiale au moins dans des zones partielles (10,11), l'écartement axial des flancs de segment, c'est-à-dire la hauteur du segment de piston, diminuant radialement vers l'extérieur et la différence de la hauteur de segment, de la zone de la courbure située radialement à l'intérieur à la zone de la courbure située radialement à l'extérieur, s'élevant au maximum à 50 µm et la courbure des flancs de segment présentant sensiblement le contour que présentent des flancs de segment après la phase de rodage, sans les particularités caractérisantes ci-avant de la présente revendication 3.
